# EUROPEAN PATENT SPECIFICATION

(11) **EP 2 195 365 B1**
(45) Date of publication and mention of the grant of the patent: **21.11.2012**
(21) Application number: 08835992.2
(22) Date of filing: 02.10.2008
(51) Int. Cl.: C08G 61/12, C08G 63/91, C08F 283/01

(54) **CURING COMPOSITION AND CURED PRODUCT PREPARED BY USING THE SAME**
HÄRTENDE ZUSAMMENSETZUNG UND DAMIT HERGESTELLTES HÄRTEPRODUKT
COMPOSITION DURCISSABLE ET PRODUIT DURCI PRÉPARÉ AU MOYEN DE CETTE COMPOSITION

(30) Priority: 02.10.2007 KR 20070099458
(43) Date of publication of application: 16.06.2010
(73) Proprietor: LG Chem, Ltd., Youngdungpo-gu Seoul 150-721 (KR)
(72) Inventor: RYU, Sang-Uk, Daejeon Metropolitan City 305-761 (KR); KIM, Dong-Ryul, Daejeon Metropolitan City 305-721 (KR); KIM, Gi-Cheul, Daejeon Metropolitan City 305-761 (KR); LEE, Ho-Jun, Daejeon Metropolitan City 305-380 (KR); HWANG, Jang-Yeon, Daejeon Metropolitan City 305-380 (KR); MA, Seung-Lac, Chungju-si Chungcheongbuk-do 380-100 (KR); KO, Myeong-Geun, Cheongju-si Chungcheongbuk-do 360-070 (KR)
(74) Representative: Goddar, Heinz J.
(86) International application number: PCT/KR2008/005838
(87) International publication number: WO 2009/045081

(56) References cited:
- JP-A- 8 217 838
- KR-A- 20050 116 633
- US-A- 5 025 095
- US-A- 5 025 095
- US-A- 5 241 037
- US-A- 5 241 037
- DATABASE WPI Week 199644 Thomson Scientific, London, GB; AN 1996-439607 XP002661649, & JP 8 217838 A (YOKOHAMA RUBBER CO LTD) 27 August 1996 (1996-08-27)

## Description

### [Technical Field]

The present invention relates to a curing composition and a cured product prepared by using the same. In particular, the present invention relates to a curing composition comprising maleimide, which provides a cured product having high heat-resistance, high toughness and a high degree of cure, and to a cured produce prepared by using the same.

This application claims priority from Korean Patent Application No. 10-2007-0099458 filed on October 2, 2007 in the Korean Intellectual Property Office, the disclosure of which is incorporated herein by reference in its entirety.

### [Background Art]

Maleimide resins and cured products thereof are known to have high heat resistance and excellent workability. Even though maleimide resins have the above excellent properties, there are problems in that they are easily broken, and have lower crack-resistance, heat resistance and peel strength.

US Patent No. 5,025,095 discloses that substituted diallylphenol derivatives are useful as reactive diluents for bismaleimides. Japanese Patent Laid-Open No. Hei8-217838 discloses a composition comprising aromatic bismaleimide, alkenylphenol and polyalkylenephthalate. However, the above described compositions do not provide sufficient heat resistance and toughness.

As the maleimide resins become applicable to a wide range of fields such as high performance composite materials and electronic materials, there is a need for the development of high performance maleimide resins.

JP 8 217838 A discloses a thermosetting resin composition containing (A) aromatic bismaleimide, (B) alkenylphenol and (C) polyalkylene phthalate. Also claimed is the cured matter of the thermosetting resin composition.

### [Disclosure]

### [Technical Problem]

The present inventors found that excellent heat resistance and toughness can be provided by using a polyarylate polymer having double bonds, along with maleimide as ingredients of a curing composition. Accordingly, the present invention provides a curing composition capable of providing excellent heat resistance and toughness, and a cured product prepared by using the same.

### [Technical Solution]

To achieve the above object, the present invention provides a curing composition comprising maleimide and polyarylate having double bonds according to claim 1.

Further, the present invention provides a method for curing the curing composition.

Furthermore, the present invention provides a cured product prepared by using the curing composition.

### [Description of Drawings]

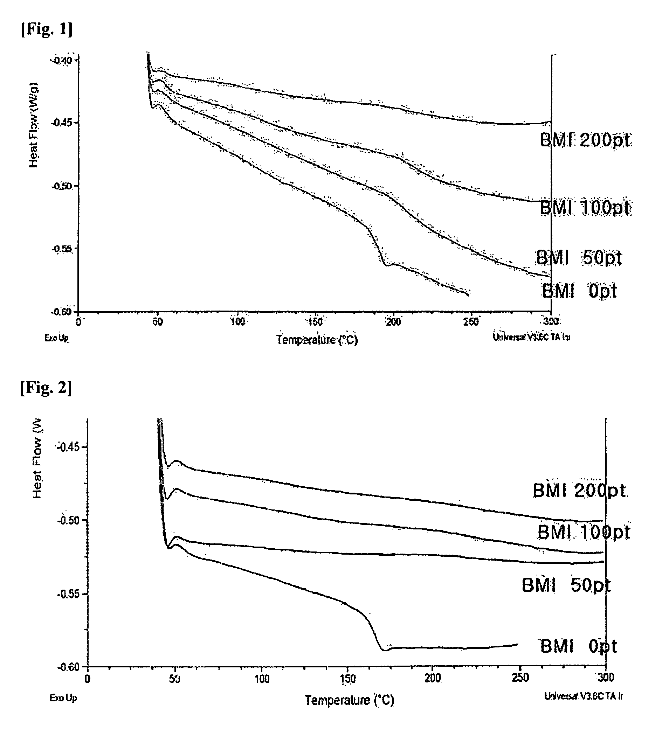

FIG. 1 is a graph showing heat flow of the cured product comprising bismaleimide and polyarylate having 5 mole% of 2,2'-diallyl bisphenol A, according to the content of bismaleimide; and
FIG. 2 is a graph showing heat flow of the cured product comprising bismaleimide and polyarylate having 20 mole% of 2,2'-diallyl bisphenol A, according to the content of bismaleimide.

### [Best Mode]

Hereinafter, the present invention will be described in detail.

The curing composition according to the present invention is characterized by comprising polyarylate having double bonds, along with maleimide. Unlike the known curing compositions including bismaleimide and monomers, the curing composition of the present invention comprises a polymer compound, along with maleimide, in which the polymer compound is polyarylate having double bonds, thereby improving heat resistance and toughness of the cured product. In the curing composition according to the present invention, the concentration of the double bond in polyarylate or the concentration of polyarylate having double bonds is controlled to control the heat resistance and degree of cure.

In the present invention, the structure of the maleimide is not particularly limited, and may be represented by the following Formula 1: 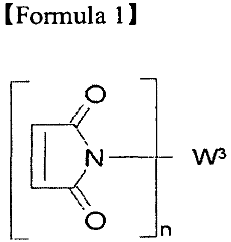 wherein n is an integer of 2 or more, W³ is each independently selected from the group consisting of alkyl, alkylaryl, alkyldiaryl, cycloalkyl, cycloalkyldiaryl, aryl, fluorenyl, fluorenediaryl, oxydiaryl, sulfonyldiaryl, sulfinyldiaryl, and carbonyldiaryl which have one or more functional groups selected from the group consisting of hydrogen atom, halogen atom, nitrile and alkoxy, and

W³ is preferably selected from alkyl, phenyl, alkyldiphenyl, cycloalkyldiphenyl, fluorenediphenyl, oxydiphenyl, biphenyl, sulfonyldiphenyl, sulfinyl diphenyl and carbonyl diphenyl which have one or more functional groups selected from the group consisting of hydrogen atom, halogen atom, nitrile and alkoxy.

In Formula 1, the alkyl is preferably straight or branched alkyl having 1 to 12 carbon atoms, the cycloalkyl is preferably cycloalkyl having 3 to 20 carbon atoms, the aryl is preferably aryl having 6 to 20 carbon atoms, and the alkylaryl is preferably alkylaryl having 7 to 20 carbon atoms. In addition, the alkyldiaryl is preferably alkyldiaryl having 13 to 40 carbon atoms, and may have a structure of -aryl-alkyl-aryl-, exemplified by bismaleimidodiphenylmethane. The cycloalkyldiaryl is preferably cycloalkyldiaryl having 15 to 40 carbon atoms, and may have a structure of -aryl-cycloalkyl-aryl-. The fluorenediaryl may have a structure of -aryl-fluorene-aryl-, and the oxydiaryl may have a structure of -aryl-oxygen-aryl-. The sulfonyldiaryl is preferably sulfonyldiaryl having 12 to 20 carbon atoms, and may have a structure of -aryl-sulfonyl-aryl-. The sulfinyldiaryl is preferably sulfinyldiaryl having 12 to 20 carbon atoms, and may have a structure of -aryl-sulfinyl-aryl-. The carbonyldiaryl is preferably carbonyldiaryl having 12 to 20 carbon atoms, and may have a structure of -aryl-carbonyl-aryl-.

In the present invention, polyarylate having double bonds includes a compound of the following Formula 2. 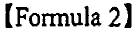 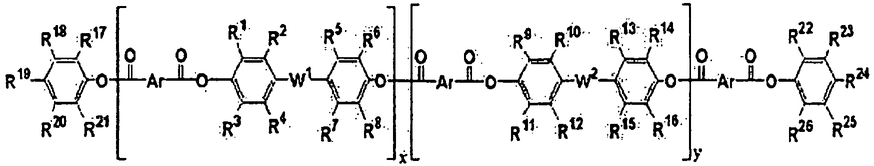 wherein x and y represent molar ratio, and x+y=1, x≥0,
R¹ to R²⁶ are each independently selected from the group consisting of hydrogen atom, halogen atom, alkyl, arylalkyl, alkenyl, arylalkenyl, aryl, alkylaryl, alkenylaryl, nitrile and alkoxy, provided that at least one of R⁹ to R¹⁶ has a double bond,
W¹ and W² are each independently selected from the group consisting of a direct bond, -O-, -S-, alkylene, cycloalkylene, fluorenylene, -S(O)₂-, -S(O)- and -CO-, and
Ar is each independently arylene group.

In Formula 2, y is preferably 0.01 to 1. If the molar ratio of y is less than 0.01, a sufficient curing effect cannot be expected. In addition, when polymerization is performed by selecting the molar ratio from 0.01 to 1, the curing degree of polyarylate with maleimide can be controlled.

A preferred Example of polyarylate represented by Formula 2 includes polyarylate represented by the following Formula 3: 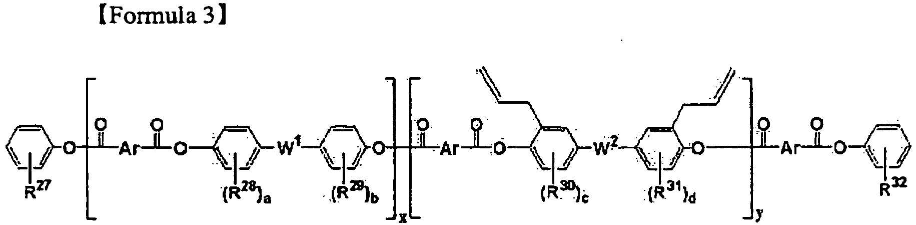 wherein x and y represent molar ratio, and x+y=1, x≥0,
R²⁷ to R³² are each independently selected from the group consisting of hydrogen atom, halogen atom, alkyl, aryl, allyl and vinyl,
a and b are an integer of 1 to 4, and c and d are an integer of 1 to 3,
W¹ and W² are each independently selected from the group consisting of a direct bond, -O-, -S-, alkylene, cycloalkylene, fluorenylene, -S(O)₂-, -S(O)- and -CO-, and
Ar is each independently selected from the group consisting of phenylene, naphthylene and biphenyl.

In Formulae 2 and 3, the alkyl is preferably straight or branched alkyl having 1 to 12 carbon atoms, cycloalkyl is preferably cycloalkyl having 3 to 20 carbon atoms, the aryl is preferably aryl having 6 to 20 carbon atoms, and the alkylaryl is preferably alkylaryl having 7 to 20 carbon atoms. In addition, the alkyl is preferably straight or branched alkyl having 1 to 12 carbon atoms, the alkenyl is preferably straight or branched alkenyl having 2 to 12 carbon atoms, and the aryl is preferably aryl having 6 to 20 carbon atoms. The arylalkyl is preferably arylalkyl having 7 to 20 carbon atoms, and the arylalkenyl is preferably arylalkenyl having 8 to 20 carbon atoms, and the alkylaryl is preferably alkylaryl having 7 to 20 carbon atoms.

The polyarylate having double bonds may be polymerized by interfacial polymerization, melt polymerization, and solution polymerization, and interfacial polymerization is preferable in terms of reaction rate and separation/purification of polymers after polymerization.

The polyarylate having double bonds may be prepared by copolymerization of divalent phenol, divalent aromatic carboxylic acid halide thereof and allyl bisphenol derivative, for example, as in Reaction Scheme 1, but is not limited thereto. 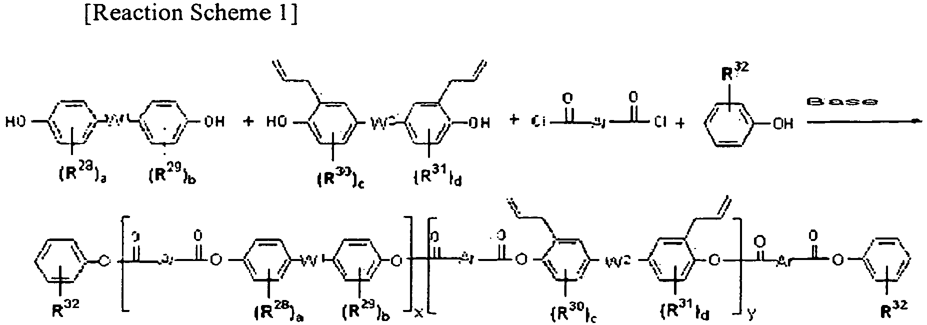 wherein R²⁸ to R³², Ar, W¹, W², X, Y, a and b are defined as in Formula 3.

Examples of the divalent aromatic carboxylic acid halide thereof used for the preparation of the polyarylate having double bonds may include terephthalic acid chloride, isophthalic acid chloride, dibenzoic acid chloride, naphthalenedicarboxylic acid chloride, 4,4'-methylene-bis(benzoic acid chloride), 4,4'-oxo-bis(benzoic acid chloride), and C1-C2 alkyl or halogen-substituted aromatic dicarboxylic acid derivatives or the mixtures thereof, but are not limited thereto. In particular, among the carboxylic acid halides, 10 to 90 mol% of terephthalic acid halide and 90 to 10 mol% of isophthalic acid halide are preferred.

Upon preparation of the polyarylate having double bonds, a molecular weight controller may be used to control the molecular weight of the polymer. Examples of the suitable molecular weight controller include monovalent hydroxy compounds, for example, monovalent phenol compounds such as phenol, o-, m-, p-cresol, o-, m-, p-ethylphenol, o-, m-, p-propyl phenol, o-, m-, p-tert-butyl phenol, o-, m-, p-allylphenol; monovalent alcohol such as methanol, ethanol, n-propanol, isopropanol, n-butanol, pentanol, hexanol, dodecyl alcohol, stearyl alcohol, benzyl alcohol, phenethyl alcohol, and allyl alcohol; monovalent (aromatic)carboxylic acids such as halide benzoyl chloride, acetic acid halide, propionic acid halide, octanoic acid halide, cyclohexylcarboxylic acid halide, toluylic acid halide, p-tert-butylbenzoic acid halide and p-methoxyphenyl acetic acid halide; and sulfonic acid chloride such as benzenesulfonic acid chloride, toluenesulfonic acid chloride, and methanesulfonic acid chloride.

In addition, examples of a base to be used in Reaction Scheme include alkali metal hydroxide such as sodium hydroxide and potassium hydroxide, and the base is preferably used in 1.01 to 2.5-fold moles of phenolic hydroxide that is contained in divalent and monovalent phenol compounds. If the usage is below 1.01 fold, the bivalent phenol compound cannot dissolve completely. In contrast, if the usage is above 2.5 fold, an excessive amount of acid is required after polymerization. Furthermore, the alkali material is preferable in less than 2.5 fold moles of phenolic hydroxides, since the aromatic dicarboxylic acid halide can be hydrolyzed during the polymerization.

Next, an organic solvent is preferably used in interfacial polymerization. The organic solvent used in the polymerization can be a solvent that can dissolve polyarylates and not be miscible with water, and may be one selected from one of methylene chloride, 1,2-dichloroethane, chloroform, carbon tetrachloride, chlorobenzene and 1,1,2,2-tetrachloroethane; or their mixture.

To facilitate the polymerization rate of interfacical polymerization, a phase transfer catalyst may be used, and examples of the typically used phase transfer catalyst include tetraalkylammonium ion, tetraalkylphosphonium ion, and nonionic surfactant.

Upon polymerization of polyarylate having double bonds, polymerization is performed at 0 to 40°C, preferably at 0 to 30°C, since the hydrolysis of carboxylic acid halide thereof and the hydrolysis of the produced polymer are suppressed. After finishing the polymerization according to the above procedure, the excessive amount of base is neutralized with acid. After standing, the aqueous layer is discarded, and the resultant was repeatedly washed with distilled water to remove salt, resulting in polyarylate having double bonds.

The polyarylate having double bonds has preferably a weight average molecular weight of 5,000 to 200,000.

In the curing composition according to the present invention, the maleimide is contained in an amount of 1 to 300 parts by weight, based on 100 parts by weight of polyarylate having double bonds.

The curing composition according to the present invention may not contain a curing catalyst, or may further contain a curing catalyst. Examples of the curing catalyst include, but are not specifically limited to, peroxides such as dicumylperoxide, 2,5-dimethyl-2,5-di(t-butylperoxide)hexin-3, and di-t-butylperoxide, peroxyesters such as t-butyl peroxyneodecanonate, peroxyneodecanonate, and t-amyl peroxypivalate; peroxycarbonates such as peroxydicarbonate, and dibutyl peroxycarbonate; azobisisobutylonitrile, azobis(2-methylbutyronitrile). In addition, a photoinitiator may be used as a curing catalyst.

In order to provide the desired physical properties, the curing composition according to the present invention may further comprise a filler, a plasticizer, a antioxidant, a release agent, a coloring agent, a coupling agent, and a solvent, if necessary.

Examples of the release agent include synthetic waxes, natural waxes, esters, metal salts of straight chain fatty acid, acid amides, and paraffins, and example of the coloring agent include carbon black. Examples of the filler include organic fillers such as polytetrafluoroethylene, and inorganic fillers such as silica, metal oxide, diamond, graphite, and carbon.

The curing composition according to the present invention may be cured by using heat, light, or microwave alone or by using them simultaneously or sequentially. For example, heat curing may be performed at 150°C or more.

After molding the curing composition according to the present invention, since the cured product has high heat resistance and strength, it can be widely applied to various fields such as electric/electronic materials, air and space materials, various adhesives, casting materials and molding materials,

The curing composition according to the present invention is molded molding methods known in the art, such as injection molding and compression molding methods, or molded and then cured under the above described curing conditions, thereby providing a cured product applicable to various fields.

### [Mode for Invention]

Hereinafter, the present invention will be described in more detail with reference to Examples. However, these Examples are for illustrative purposes only, and the invention is not intended to be limited by these Examples.

### Example

The weight average molecular weight and the glass transition temperature of the prepared polymer were evaluated using the following method.
(1) After the polymerization was finished, the polymer was isolated in precipitated in methanol and dissolved with tetrahydrofuran for chromatography to have the content of 0.1 wt%, the measurement was performed by means of gel permeation chromatography using tetrahydrofuran for chromatography as an eluant, and the molecular weight was calculated using a standard polystyrene.
(2) The glass transition temperature was measured using DSC (differential scanning calorimeter). The thermal historyl of the sample was removed by increasing the temperature up to 250°C at a heating rate of 10°C /min under a nitrogen atmosphere, and the temperature was reduced to room temperature and then increased to 250°C at a heating rate of 10°C/min in order to measure the glass transition temperature.

### Polymerization of polyarylate having double bonds 1.

450 g of distilled water, 19.4 g of NaOH, 50.6 g of bisphenol A, 3.6 g of 2,2'-diallyllbisphenol A, 0.9 g of 4-t-butylphenol, and 0.25 g of benzyltriethylammonium chloride were added to a reactor that is provided with an agitator, and the temperature of the reactor was maintained at 25°C. Separately, 46.5 g of aromatic dicarboxylic acid chloride mixture in which the same amounts of isophthalic acid chloride and terephthalic acid chloride were mixed with each other was dissolved in 600 g of methylene chloride. The aromatic dicarboxylic acid chloride solution was added slowly to the reactor in which the alkali aqueous solution was dissolved and the solution was stirred at 500 rpm for 1hr at 25°C. After the stirring was performed for 1 hour, a hydrochloric acid was added, and the aqueous layer was decanted, the organic layer was washed with distilled water and the aqueous layer was decanted. The washing was repeated until the conductivity of the aqueous layer was 20 µs/cm or less, the resulting solution was poured onto excess methanol to perform phase separation of polymers. The polymers were filtered, and the drying was performed in a vacuum oven at 60°C for 12 hours to remove the solvent to give polyarylate having bisphenol A and 5 mol% of 2,2'-diallyllbisphenol A.

The obtained polyarylate had the weight average molecular weight of Mw 39,000, and the glass transition temperature of 191 °C.

### Polymerization of polyarylate having double bonds 2.

450 g of distilled water, 18.2 g of NaOH, 40.0 g of bisphenol A, 13.9 g of 2,2'-diallyllbisphenol A, 0.9 g of 4-t-butylphenol, and 0.25 g of benzyltriethylammonium chloride were added to a reactor that is provided with an agitator, and the temperature of the reactor was maintained at 25°C. Separately, 43.8 g of aromatic dicarboxylic acid chloride mixture in which the same amounts of isophthalic acid chloride and terephthalic acid chloride were mixed with each other was dissolved in 600 g of methylene chloride. The aromatic dicarboxylic acid chloride solution was added slowly to the reactor in which the alkali aqueous solution was dissolved and the solution was stirred at 500 rpm at 25°C. After the stirring was performed for 1 hour, a hydrochloric acid was added, and the aqueous layer was decanted. the organic layer was washed with distilled water and the aqueous layer was decanted. The washing was repeated until the conductivity of the aqueous layer was 20 µs/cm or less, the resulting solution was poured onto excess methanol to perform phase separation of polymers.. The polymers were filtered, and the drying was performed in a vacuum oven at 60°C for 12 hours to remove the solvent to give polyarylate having bisphenol A and 20 mol% of 2,2'-diallyllbisphenol A.

The obtained polyarylate had the weight average molecular weight of Mw 74,000, and the glass transition temperature of 163°C.

### Polymerization of polyarylate having double bonds 3.

400 g of distilled water, 15.5 g of NaOH, 57.5 g of 2,2'-diallyllbisphenol A, 0.9 g of t-butylphenol, and 0.25 g of benzyltriethylammonium chloride were added to a reactor that is provided with an agitator, and the temperature of the reactor was maintained at 25°C. Separately, 42.0 g of aromatic dicarboxylic acid chloride mixture in which the same amounts of isophthalic acid chloride and terephthalic acid chloride were mixed with each other was dissolved in 600 g of methylene chloride. The aromatic dicarboxylic acid chloride solution was added slowly to the reactor in which the alkali aqueous solution was dissolved and the solution was stirred at 500 rpm at 25°C. After the stirring was performed for 1 hour, a hydrochloric acid was added, and the aqueous layer was decanted. The organic layer was washed with distilled water and the aqueous layer was decanted. The washing was repeated until

the conductivity of the aqueous layer was 20 µs/cm or less, the resulting solution was poured onto excess methanol to perform phase separation of polymers.. The polymers were filtered, and the drying was performed in a vacuum oven at 60°C for 12 hours to remove the solvent to give polyarylate having bisphenol A and 100 mol% of 2,2'-diallyllbisphenol A.

The obtained polyarylate had the weight average molecular weight of Mw 43,000, Mw/Mn of 4.94, and the glass transition temperature of 79°C.

### The result of curing polyarylate having bismaleimide and double bonds

0, 50, 100, and 200 pt of bismaleimidodiphenylmethane (BMI) were added to the solutions, in which 100 pt of each polyarylate polymer having a different amount of 2,2'-diallyllbisphenol A (polymerization 1, 2, 3) was dissolved in 1,2-dichloroethane at a concentration of 10 wt%, and dissolved at 70°C to prepare a homogeneous solution. The obtained solution was poured into a Teflon mold, and then the temperature was increased to 250°C at a heating rate of 2°C/min, and curing was performed at 250 °C for 2 hrs, and then the temperature was slowly decreased to room temperature. The obtained sample was heated to 300°C at a heating rate of 10°C/min in DSC, and Tg was analyzed. The results are shown in the following Table 1.

**[Table 1]**

| Polyarylate | | |
|---|---|---|
| Polymerization No. | BMI(pt) | Tg(°C) |
| Polymerization 1 | 0 | 191 |
| | 50 | 205 |
| | 100 | 215 |
| | 200 | 217 |
| Polymerization 2 | 0 | 163 |
| | 50 | 216 |
| | 100 | Not measured |
| | 200 | Not measured |
| Polymerization 3 | 0 | 93 |
| | 50 | Not measured |
| | 100 | Not measured |
| | 200 | Not measured |

### <Comparative Example>

### Polymerization of polyarylate having no double bond 4

450 g of distilled water, 18.6 g of NaOH, 51.3 g of bisphenol A, 0.9 g of 4-t-butylphenol, and 0.25 g of benzyltriethylammonium chloride were added to a reactor that is provided with an agitator, and the temperature of the reactor was maintained at 25°C. Separately, 44.7 g of aromatic dicarboxylic acid chloride mixture in which the same amounts of isophthalic acid chloride and terephthalic acid chloride were mixed with each other was dissolved in 600 g of methylene chloride. The aromatic dicarboxylic acid chloride solution was added slowly to the reactor in which the alkali aqueous solution was dissolved and the solution was stirred at 500 rpm at 25°C. After the stirring was performed for 1 hour, a hydrochloric acid was added, and the aqueous layer was decanted. the organic layer was washed with distilled water and the aqueous layer was decanted. The washing was repeated until the conductivity of the aqueous layer was 20 µs/cm or less, the resulting solution was poured onto excess methanol to perform phase separation of polymers.. The polymers were filtered, and the drying was performed in a vacuum oven at 60°C for 12 hours to remove the solvent to give polyarylate having bisphenol A and 0 mol% of 2,2'-diallyllbisphenol A.

The obtained polyarylate had the weight average molecular weight of Mw 70,000, Mw/Mn of 2.11, and the glass transition temperature of 193°C.

### The result of curing polyarylate having no bismaleimide and double bond

0, 100, and 200 pt of bismaleimidodiphenylmethane (BMI) were added to the solutions, in which 100 pt of each polyarylate polymer having no double bond (polymerization 4) was dissolved in 1,2-dichloroethane at a concentration of 15 wt%, and dissolved at 70°C to prepare a homogeneous solution. The obtained solution was poured into a Teflon mold, and then the temperature was increased to 250°C at a heating rate of 2°C/min, and curing was performed at 250°C for 2 hrs, and then the temperature was slowly decreased to room temperature. The obtained sample was heated to 300°C at a heating rate of 10°C/min in DSC, and Tg was analyzed. The results are shown in the following Table 2.

**[Table 2]**

| Polyarylate | | |
|---|---|---|
| Polymerization No. | BMI(pt) | Tg(°C) |
| Polymerization 4 | 0 | 193 |
| | 100 | 195 |
| | 200 | 194 |

As shown in Tables 1 and 2, heat resistance can be improved by curing the polyarylate having double bonds and maleimide. However, when polyarylate has no double bond, heat resistance was not improved. In addition, the improvement in heat resistance can be expected, when polyarylate having many double bonds are cured with a small amount of bismaleimide.

### [Industrial Applicability]

The curing composition according to the present invention comprises polyarylate having double bonds, which is not a monomer but a polymer form, along with maleimide, thereby being excellent in heat resistance and toughness, and controlling heat resistance.

## Claims

1. A curing composition comprising maleimide and polyarylate having double bonds, wherein the polyarylate includes a compound represented by the following Formula 2: 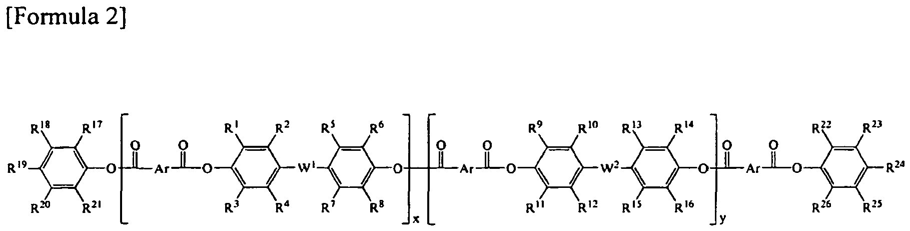 wherein x and y represent molar ratio, and x+y=1, x>0,
R¹ to R²⁶ are each independently selected from the group consisting of hydrogen atom, halogen atom, alkyl, arylalkyl, alkenyl, arylalkenyl, aryl, alkylaryl, alkenylaryl, nitrile and alkoxy, with the proviso that at least one of R⁹ to R¹⁶ has a double bond,
W¹ and W² are each independently selected from the group consisting of a direct bond, -O-, -S-, alkylene, cycloalkylene, fluorenylene, -S(O)₂-, -S(O)- and -CO-, and
Ar is each independently arylene group.

2. The curing composition according to claim 1, further comprising a curing catalyst.

3. The curing composition according to claim 2, wherein the curing catalyst is a peroxide-based, peroxyester-based, peroxycarbonate-based, azo-based curing catalyst or a photoinitiator.

4. The curing composition according to claim 1, wherein the maleimide includes a compound represented by the following Formula 1: 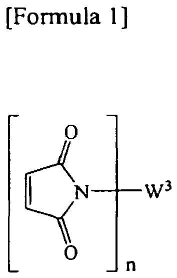 wherein n is an integer of 2 or more, and
W³ is each independently selected from the group consisting of alkyl, alkylaryl, alkyldiaryl, cycloalkyl, cycloalkyldiaryl, aryl, fluorenyl, fluorenediaryl, oxydiaryl, sulfonyldiaryl, sulfinyldiaryl and carbonyldiaryl which have one or more functional groups selected from the group consisting of hydrogen atom, halogen atom, nitrile and alkoxy.

5. The curing composition according to claim 4, wherein W³ is selected from alkyl, phenyl, alkyldiphenyl, cycloalkyldiphenyl, fluorenediphenyl, oxydiphenyl, biphenyl, sulfonyldiphenyl, sulfinyldiphenyl and carbonyldiphenyl which have one or more functional groups selected from the group consisting of hydrogen atom, halogen atom, nitrile and alkoxy.

6. The curing composition according to claim 1, wherein the compound represented by Formula 2 is a compound represented by the following Formula 3: 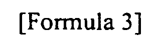 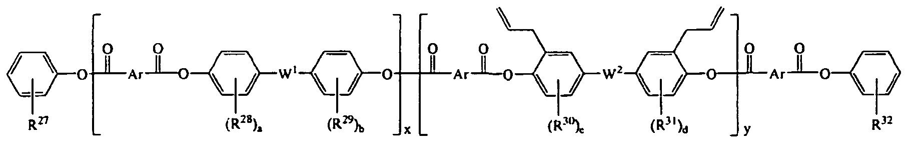 wherein x and y represent molar ratio, and x+y=1, x>0,
R²⁷ to R³² are each independently selected from the group consisting of hydrogen atom, halogen atom, alkyl, aryl, allyl, and alkyl having a vinyl group,
a and b are an integer of I to 4, and c and d are an interger of 1 to 3,
W¹ and W² are each independently selected from the group consisting of a direct bond, -O-, -S-, alkylene, cycloalkylene, fluorenylene, -S(O)₂-, -S(O)- and -CO-, and
Ar is each independently selected from the group consisting of phenylene, naphthylene and biphenyl.

7. The curing composition according to claim 1, wherein y in Formula 2 is 0.01 to 1.

8. The curing composition according to claim 1, wherein the polyarylate having double bonds has a weight average molecular weight of 5,000 to 200,000.

9. The curing composition according to claim 1, wherein the maleimide is contained in an amount of 1 to 300 parts by weight, based on 100 parts by weight of polyarylate having double bonds.

10. A curing method, comprising the step of curing the curing composition according to any one of claims 1 to 9 by simultaneously or sequentially using at least one selected from the group consisting of heat, light, and microwave.

11. A cured product manufactured by using the curing composition according to any one of claims 1 to 9.

## Patentansprüche

1. Härtende Zusammensetzung umfassend Maleimid und Polyarylat mit Doppelbindungen, wobei das Polyarylat eine Verbindung einschließt, die dargestellt ist durch die folgende Formel 2: 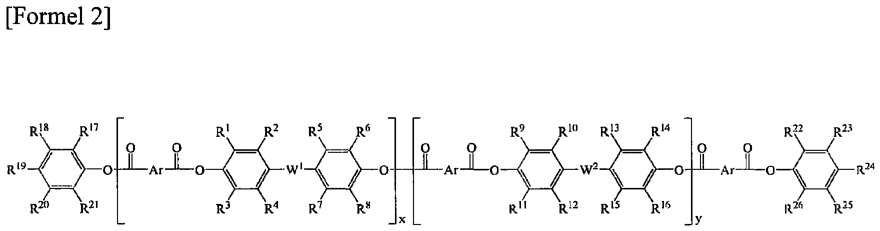 wobei x und y ein Molverhältnis darstellen und x+y=1, x>0 ist,
R¹ bis R²⁶ jeweils unabhängig ausgewählt sind aus der Gruppe bestehend aus Wasserstoffatom, Halogenatom, Alkyl, Arylalkyl, Alkenyl, Arylalkenyl, Aryl, Alkylaryl, Alkenylaryl, Nitril und Alkoxy, mit der Maßgabe, dass wenigstens eines von R⁹ bis R¹⁶ eine Doppelbindung aufweist,
W¹ und W² jeweils unabhängig ausgewählt sind aus der Gruppe bestehend aus einer direkten Bindung, -O-, -S-, Alkylen, Cycloalkylen, Fluorenylen, -S(O)₂-, -S(O)- und - CO-, und
Ar jeweils unabhängig eine Arylengruppe ist.

2. Härtende Zusammensetzung nach Anspruch 1, weiter umfassend einen härtenden Katalysator.

3. Härtende Zusammensetzung nach Anspruch 2, wobei der härtende Katalysator ein härtender Katalysator auf Peroxid-Basis, Peroxyester-Basis, Peroxydcarbonat-Basis, Azo-Basis oder ein Photoinitiator ist.

4. Härtende Zusammensetzung nach Anspruch 1, wobei das Maleimid eine Verbindung einschließt, die dargestellt ist durch die folgende Formel 1: 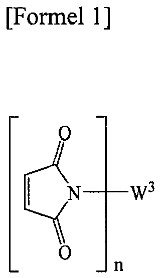 wobei n eine ganze Zahl von 2 oder mehr ist, und
W³ jeweils unabhängig ausgewählt ist aus der Gruppe bestehend aus Alkyl, Alkylaryl, Alkyldiaryl, Cycloalkyl, Cycloalkyldiaryl, Aryl, Fluorenyl, Fluorendiaryl, Oxydiaryl, Sulfonyldiaryl, Sulfinyldiaryl und Carbonyldiaryl, die eine oder mehrere funktionelle Gruppen ausgewählt aus der Gruppe bestehend aus Wasserstoffatom, Halogenatom, Nitril und Alkoxy aufweisen.

5. Härtende Zusammensetzung nach Anspruch 4, wobei W³ ausgewählt ist aus Alkyl, Phenyl, Alkyldiphenyl, Cycloalkyldiphenyl, Fluorendiphenyl, Oxydiphenyl, Biphenyl, Sulfonyldiphenyl, Sulfinyldiphenyl und Carbonyldiphenyl, die eine oder mehrere funktionelle Gruppen ausgewählt aus der Gruppe bestehend aus Wasserstoffatom, Halogenatom, Nitril und Alkoxy aufweisen.

6. Härtende Zusammensetzung nach Anspruch 1, wobei die durch Formel 2 dargestellte Verbindung eine Verbindung ist, die durch die folgende Formel 3 dargestellt ist: 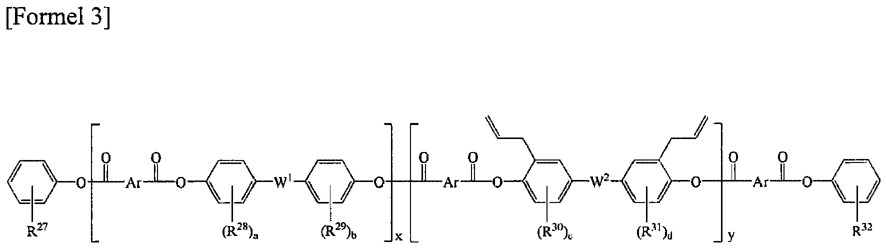 wobei x und y ein Molverhältnis darstellen und x+y=1, x>0 ist,
R²⁷ bis R³² jeweils unabhängig ausgewählt sind aus der Gruppe bestehend aus Wasserstoffatom, Halogenatom, Alkyl, Aryl, Allyl und Alkyl mit einer Vinyl-Gruppe,
a und b eine ganze Zahl von 1 bis 4 sind, und c und d eine ganze Zahl von 1 bis 3 sind,
W¹ und W² jeweils unabhängig ausgewählt sind aus der Gruppe bestehend aus einer direkten Bindung, -O-, -S-, Alkylen, Cycloalkylen, Fluorenylen, -S(O)₂-, -S(O)- und - CO-, und
Ar jeweils unabhängig ausgewählt ist aus der Gruppe bestehend aus Phenylen, Naphthylen und Biphenyl.

7. Härtende Zusammensetzung nach Anspruch 1 , wobei y in Formel 2 0,01 bis 1 ist.

8. Härtende Zusammensetzung nach Anspruch 1, wobei das Polyarylat mit Doppelbindungen ein Gewichtsmittelmolekulargewicht von 5.000 bis 200.000 aufweist.

9. Härtende Zusammensetzung nach Anspruch 1, wobei das Maleimid in einer Menge von 1 bis 300 Gewichtsteilen, basierend auf 100 Gewichtsteilen Polyarylat mit Doppelbindungen, enthalten ist.

10. Härtungsverfahren umfassend den Schritt eines Härtens der härtenden Zusammensetzung nach einem der Ansprüche 1 bis 9 durch gleichzeitiges oder aufeinanderfolgendes Verwenden wenigstens eines ausgewählt aus der Gruppe bestehend aus Wärme, Licht und Mikrowellen.

11. Gehärtetes Produkt, hergestellt durch Verwendung der härtenden Zusammensetzung nach einem der Ansprüche 1 bis 9.

## Revendications

1. Composition durcissable comprenant un maléimide et du polyarylate ayant des doubles liaisons, dans laquelle le polyarylate contient un composé représenté par la Formule 2 suivantes : 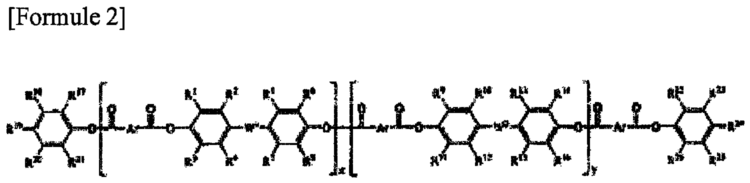 où x et y représentent un rapport molaire et x + y = 1, x>0,
R¹ à R²⁶ sont chacun indépendamment sélectionnés parmi le groupe constitué d'un atome d'hydrogène, d'un atome d'halogène, alkyle, arylalkyle, alkényle, aryalkényle, aryle, alkylaryle, alkénylaryle, nitrile et alkoxy, à condition qu'au moins l'un de R⁹ à R¹⁶ possède une double liaison,
W¹ et W² sont chacun indépendamment sélectionnés parmi le groupe constitué d'une liaison directe, -O-, -S-, alkylène, cycloalkylène, fluorénylène, -S(O)₂-, -S(O)- et -CO-, et
Ar est chacun indépendamment un groupe arylène.

2. Composition durcissable selon la revendication 1, comprenant en outre un catalyseur de durcissement.

3. Composition durcissable selon la revendication 2, dans laquelle le catalyseur de durcissement est un catalyseur de durcissement à base de peroxyde, à base de peroxyester, à base de peroxycarbonate, à base d'azo ou un photoamorceur.

4. Composition de durcissement selon la revendication 1, dans laquelle le maléimide contient un composé représenté par la formule 1 : 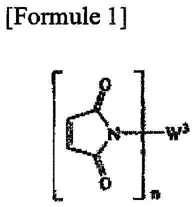 où n représente un nombre entier de 2 ou supérieur, et
W³ est chacun indépendamment sélectionné parmi le groupe constitué d'alkyle, alkylaryle, alkyldiaryle, cycloalkyle, cycloalkyldiaryle, aryle, fluorényle, fluorènediaryle, oxydiaryle, sulfonyldiaryle, sulfinyldiaryle et carbonyldiaryle qui présentent un ou plusieurs groupes fonctionnels sélectionnés parmi le groupe constitué d'un atome d'hydrogène, d'un atome d'halogène, de nitrile et d'alkoxy.

5. Composition durcissable selon la revendication 4, dans laquelle W³ est sélectionné parmi alkyle, phényle, alkydiphényle, cycloalkyldiphényle, fluorènediphényle, oxydiphényle, biphényle, sulfonyldiphényle, sulfinyldiphényle et carbonyldiphényle qui présentent un ou plusieurs groupes fonctionnels sélectionnés parmi le groupe constitué d'un atome d'hydrogène, d'un atome d'halogène, de nitrile et d'alkoxy.

6. Composition durcissable selon la revendication 1, dans laquelle le composé représenté par la Formule 2 est un composé représenté par la Formule 3 suivante : 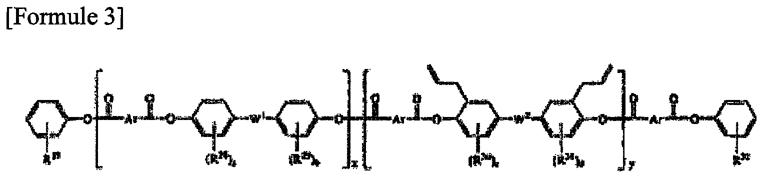 où x et y représentent un rapport molaire et x + y = 1, x>0,
R²⁷ à R³² sont chacun indépendamment sélectionnés parmi le groupe constitué d'un atome d'hydrogène, d'un atome d'halogène, alkyle, aryle, allyle et alkyle présentant un groupe vinyle,
a et b représentent un nombre entier de 1 à 4 et c et d représentent un nombre entier de 1 à 3, W¹ et W² sont chacun indépendamment sélectionnés parmi le groupe constitué d'une liaison directe, -O-, -S-, alkylène, cycloalkylène, fluorénylène, -S(O)₂-, -S(O)- et -CO- et
Ar est chacun indépendamment sélectionné parmi le groupe constitué de phénylène, naphtylène et biphényle.

7. Composition durcissable selon la revendication 1, dans laquelle y dans la Formule 2 représente 0,01 à 1.

8. Composition durcissable selon la revendication 1, dans laquelle le polyarylate possédant des doubles liaisons a une masse moléculaire moyenne en poids de 5.000 à 2000.000.

9. Composition durcissable selon la revendication 1, dans laquelle le maléimide est contenu selon une quantité de 1 à 300 parties en poids, basée sur 100 parties en poids du polyarylate présentant des doubles liaisons.

10. Procédé de durcissement, comprenant l'étape de durcissement de la composition durcissable selon l'une quelconque des revendications 1 à 9 en utilisant simultanément ou séquentiellement au moins un élément sélectionné parmi le groupe constitué de chaleur, de lumière et de micro-ondes.

11. Produit durci fabriqué en utilisant la composition durcissable selon l'une quelconque des revendications 1 à 9.
